# EUROPEAN PATENT APPLICATION

(11) **EP 4 643 628 A1**
(43) Date of publication of application: **05.11.2025**
(21) Application number: 22970068.7
(22) Date of filing: 27.12.2022
(51) Int. Cl.: A01C 7/16

(54) **EJECTION DEVICE**

(71) Applicant: Kubota Corporation, Osaka 556-8601 (JP)
(72) Inventor: TORIMOTO, Masaru, Sakai-shi, Osaka 590-0908 (JP)
(74) Representative: Cabinet Beau de Loménie
(86) International application number: PCT/JP2022/048264
(87) International publication number: WO 2024/142275

(57) **Abstract**

There has been a demand for a simply configured ejecting device capable of ejecting a granule suitably without the risk of, for example, the granule being stuck to cause an operation failure. An ejecting device includes: a cylinder tube 20; a piston 21 slidable in the cylinder tube 20; and a gas supply and discharge means 22 switchable between a supply mode, in which the gas supply and discharge means 22 supplies gas into an internal space of the cylinder tube 20, and an open mode, in which the gas supply and discharge means 22 exposes the internal space to outside; and an ejector 23 configured to, in response to a movement of the piston 21, eject gas out of the cylinder tube 20 which gas has been supplied into the internal space and compressed.

## Description

### Technical Field

The present invention relates to an ejecting device configured to eject a granule.

### Background Art

An example of the above ejecting device may conventionally include a rotor drivable to rotate at high speed and provided with two or more radially extending blades and a discharge mechanism configured to discharge a granule such as a seed from a storage, and be configured to eject the granule downward with use of the blades (see, for example, Patent Literature 1).

### Citation List

### Patent Literature

Patent Literature 1
International Publication No. WO2021-182108

### Summary of Invention

### Technical Problem

The above configuration requires the use of the blades to forcefully eject a granule, requiring the rotor to be driven to rotate at high speed. However, the granule, which is supplied to the rotor rotating at high speed, may become stuck between the tip of a blade and the inner surface of a cylindrical guide. This may unfortunately cause the blade to press the granule strongly against the inner surface and crush the granule or cause the granule stuck as above to stop the rotation of the rotor.

The above circumstances have led to a demand for a simply configured ejecting device capable of ejecting a granule suitably without the risk of, for example, the granule being stuck to cause an operation failure.

### Solution to Problem

An ejecting device according to the present invention characteristically includes: a cylinder tube; a piston slidable in the cylinder tube; and a gas supply and discharge means switchable between a supply mode, in which the gas supply and discharge means supplies gas into an internal space of the cylinder tube, and an open mode, in which the gas supply and discharge means exposes the internal space to outside; and an ejector configured to, in response to a movement of the piston, eject gas out of the cylinder tube which gas has been supplied into the internal space and compressed.

The ejecting device is configured as follows: With the piston stationary, the gas supply and discharge means supplies gas into the internal space of the cylinder tube to compress gas in the internal space. Moving the piston in this state causes the ejector to forcefully eject compressed gas out of the cylinder tube for the gas to blow off a granule.

The ejecting device is, as described above, configured to compress externally supplied gas and forcefully eject the compressed gas out of the cylinder tube to blow off a granule to supply the granule to a target position. The above configuration simply causes compressed gas to act on a granule and does not let a granule collide with an object moving at high speed. This in turn prevents a granule from being stuck between objects. The ejecting device is simply configured to compress gas and move a piston to eject gas.

The above configuration therefore provides a simply configured ejecting device capable of ejecting a granule suitably without the risk of, for example, the granule being stuck to cause an operation failure.

The ejecting device may preferably be further configured such that the cylinder tube contains a first gas chamber on a first side of the piston in a slide direction and a second gas chamber on a second side of the piston in the slide direction, the second gas chamber receives gas from the gas supply and discharge means, and the first gas chamber is provided with the ejector.

With the above configuration, the gas supply and discharge means supplies gas into the second gas chamber to compress gas in the second gas chamber. The compressed gas presses the piston in such a direction as to close the ejector. The ejecting device, in this state, lets gas flow into the first gas chamber from the second gas chamber or from the outside to compress gas in the first gas body as well.

The gas supply and discharge means being switched into the open mode discharges gas from the second gas chamber and moves the piston to open the ejector. This causes the ejector to discharge compressed gas from the first gas chamber.

The above configuration allows the ejecting device to eject a granule with use of compressed gas from the cylinder tube.

The ejecting device may preferably further include: a rod extending in the slide direction on the first side of the piston in the slide direction, wherein the ejector is at an end of the cylinder tube which end is on the first side in the slide direction, the rod is switchable, in response to a movement of the piston, between a closed state, in which the rod closes the ejector, and an open state, in which the rod opens the ejector to allow gas to be ejected, in response to the gas supply and discharge means being switched into the supply mode, the rod is switched into the closed state to allow gas to be supplied through the second gas chamber into the first gas chamber to be compressed, and in response to the gas supply and discharge means being switched from the supply mode into the open mode, the rod is switched into the open state for the ejector to eject compressed gas out of the cylinder tube.

The above configuration allows the gas supply and discharge means to be switched into the supply mode to compress gas in the second gas chamber. This moves the piston for the rod to close the ejector. The above configuration then allows gas to be supplied through the second gas chamber into the first gas chamber to compress gas in the first gas chamber as well. In response to the gas supply and discharge means being switched into the open mode, the rod is switched into the open state for the ejector to discharge gas.

The above configuration utilizes a rod on the piston to simplify the configuration of the ejector. The above configuration also eliminates the need to externally supply gas into the first gas chamber and uses a single gas supply and discharge means to further simply the configuration.

The ejecting device may preferably further include: a backflow preventer configured to allow gas having been supplied into the second gas chamber to flow into the first gas chamber and prevent gas having been supplied into the first gas chamber from flowing into the second gas chamber.

The above configuration allows gas having been supplied by the gas supply and discharge means into the second gas chamber to flow into the first gas chamber and prevents the gas from flowing from the first gas chamber back into the second gas chamber. This allows the ejecting device to compress gas in the first gas chamber with effective use of gas having been supplied by the gas supply and discharge means into the second gas chamber.

The ejecting device may preferably be further configured such that the backflow preventer is in a form of a unidirectional sealer at a peripheral portion of the piston.

The above configuration uses a simple element in the form of a unidirectional sealer to compress gas in each of the first and second gas chambers.

The ejecting device may preferably be further configured such that the second gas chamber has a cross-sectional area larger than a cross-sectional area of the first gas chamber.

With the above configuration, when gas having been supplied by the gas supply and discharge means into the second gas chamber has flown into the first gas chamber, the first gas chamber has an internal pressure pressing the piston which internal pressure is not larger than the internal pressure of the second gas chamber pressing the piston. This prevents the ejector from being opened erroneously.

The ejecting device may preferably further include: an agricultural material supply section disposed at a portion of the ejector from which portion the ejector ejects gas and configured to supply an agricultural material.

The above configuration uses gas ejected from the ejector to blow off an agricultural material such as a seed or fertilizer toward an intended position to supply the agricultural material to the intended position.

### Brief Description of Drawings

Fig. 1 is a front view of a work system.
Fig. 2 is a plan view of a work system.
Fig. 3 is a side view of a seeding device.
Fig. 4 is a vertical cross-sectional view of an ejection mechanism.
Fig. 5 is a diagram illustrating the configuration of a gas source.
Fig. 6 is a cross-sectional view of a lip packing and its surroundings.
Fig. 7 is a diagram illustrating an operation.
Fig. 8 is a vertical cross-sectional view of an ejection mechanism for an alternative embodiment.
Fig. 9 is a diagram illustrating an operation for an alternative embodiment.
Fig. 10 is a front view of an element holding seeding devices for an alternative embodiment.
Fig. 11 is a front view of a work system for an alternative embodiment.
Fig. 12 is a plan view of a work system for an alternative embodiment.

### Description of Embodiments

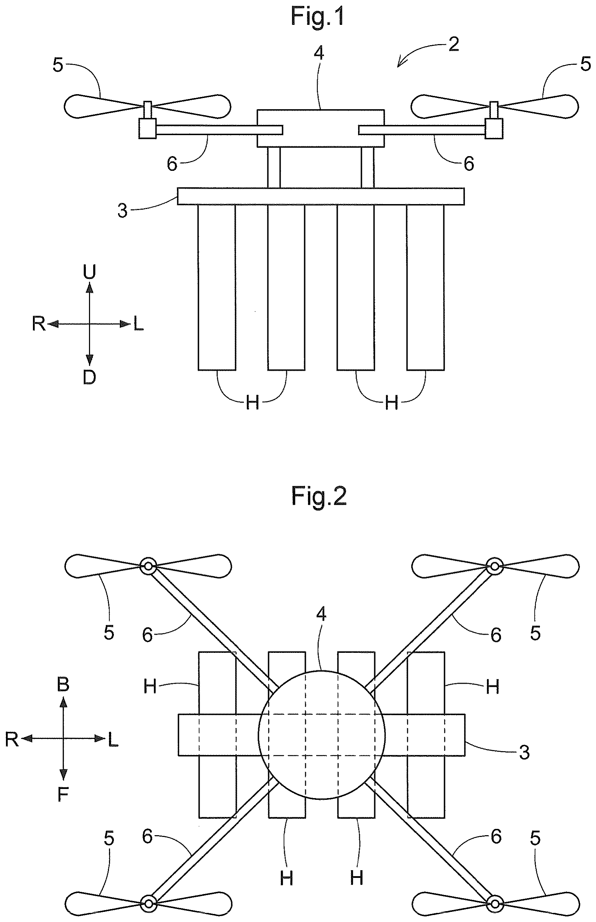

The description below deals with an embodiment of the present invention with reference to drawings. Unless otherwise specified, the description below uses terms such as "front" and "forward" to refer to the direction indicated with arrow F in Fig. 2, terms such as "rear" and "rearward" to refer to the direction indicated with arrow B in Fig. 2, terms such as "left" and "leftward" to refer to the direction indicated with arrow L in Figs. 1 and 2, terms such as "right" and "rightward" to refer to the direction indicated with arrow R in Figs. 1 and 2, terms such as "above" and "upward" to refer to the direction indicated with arrow U in Fig. 1, and terms such as "below" and "downward" to refer to the direction indicated with arrow D in Fig. 1.

Figs. 1 and 2 each illustrate a work system configured to supply an agricultural material to an agricultural field. The work system includes seeding devices H (which are each an example of the "ejecting device" according to the present invention) and an unmanned flying vehicle 2 called a drone. The flying vehicle 2 is configured to fly independently and includes a body 4, two or more rotors 5, and two or more arms 6.

The flying vehicle 2 may include any number of rotors 5 or arms 6. For the present embodiment, the flying vehicle 2 includes four rotors 5 and four arms 6. The arms 6 extend from the body 4 in a left and forward direction, in a right and forward direction, in a left and rearward direction, and in a right and rearward direction, respectively.

The flying vehicle 2 includes an electric motor (not illustrated in the drawings) configured to drive the rotors 5 for the flying vehicle 2 to fly. Specifically, the flying vehicle 2 drives the rotors 5 to float in the air and move in the vertical, front-rear, and lateral directions. The flying vehicle 2 is also configured to drive the rotors 5 to hover.

The flying vehicle 2 includes a holding frame 3. The seeding devices H are suspended from the body 4 with the holding frame 3 in-between. The seeding devices H are arranged laterally apart from one another.

The seeding devices H are each configured to eject seeds (which is an example of the "granule") into a fertilization groove in an agricultural field. The flying vehicle 2 is controlled to fly for each seeding device H to move along the groove (not detailed). The flying vehicle 2 may be controlled to repeat moving and hovering so that the seeding devices H eject seeds while the flying vehicle 2 is hovering or to move continuously so that the seeding devices H eject seeds while the flying vehicle 2 is moving.

The flying vehicle 2 includes a well-known satellite positioning device (not illustrated in the drawings) and a control unit (not illustrated in the drawings) configured to control how the rotors 5 are driven to control how the flying vehicle 2 flies. The satellite positioning device is configured to receive global navigation satellite system (GNSS) signals from artificial satellites and generate positioning data indicative of the position of the flying vehicle 2 on the basis of the signals. The GNSS may be, for example, GPS, QZSS, Galileo, GLONASS, or BeiDou. The control unit is configured to, on the basis of the result of positioning by the satellite positioning device and preset data on a map of an agricultural field, control how the rotors 5 are driven for the flying vehicle 2 to move along a predetermined work path.

The description below deals with how the seeding devices H are configured.

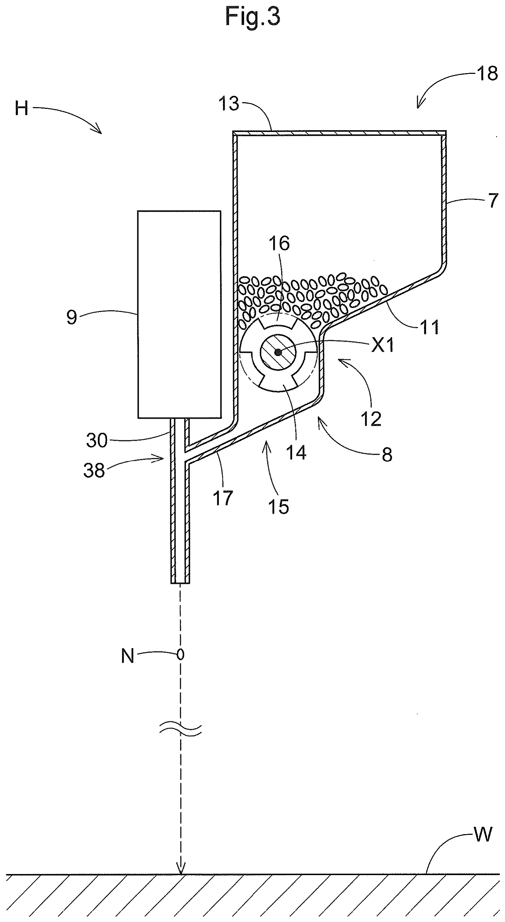

As illustrated in Fig. 3, the seeding devices H each include a hopper 7 as a storage, a discharger 8, and an ejection mechanism 9. The hopper 7 is configured to store seeds N (which is an example of the "granule"). The discharger 8 is configured to discharge seeds N from the hopper 7. The ejection mechanism 9 is configured to eject seeds N from the discharger 8 toward an agricultural field as a supply destination.

The hopper 7 includes a side wall surrounding a storage space and has above the storage space an opening for receiving a large number of seeds N. The hopper 7 includes an attachable and detachable lid 13 configured to block the opening after the hopper 7 receives seeds N. The hopper 7 includes at a lower portion a flow-down guide 11 tapered downward and also includes at a lower end of the flow-down guide 11 a release section 12 configured to discharge stored seeds N downward.

The discharger 8 includes a discharge roller 14 supported by the discharge case 15 in such a manner as to be rotatable about a lateral axis X1. The discharge roller 14 has at a peripheral surface three depressions 16 separated from one another at predetermined circumferential intervals and configured to receive granules. The discharge roller 14 has a small width along its rotation axis for each depression 16 to be capable of receiving one to several seeds N. The discharge roller 14 is drivable about the axis X1 by an electric motor (not illustrated in the drawings).

The rotation of the discharge roller 14 lets seeds N be discharged downward from each depression 16. The discharge case 15 includes at a lower portion a cylindrical flow-down guide 17 configured to guide seeds N from the discharge roller 14.

The ejection mechanism 9 is lateral to the discharger 8 and is configured to eject seeds N from the discharger 8 forcefully toward an agricultural field.

The description below deals with the ejection mechanism 9.

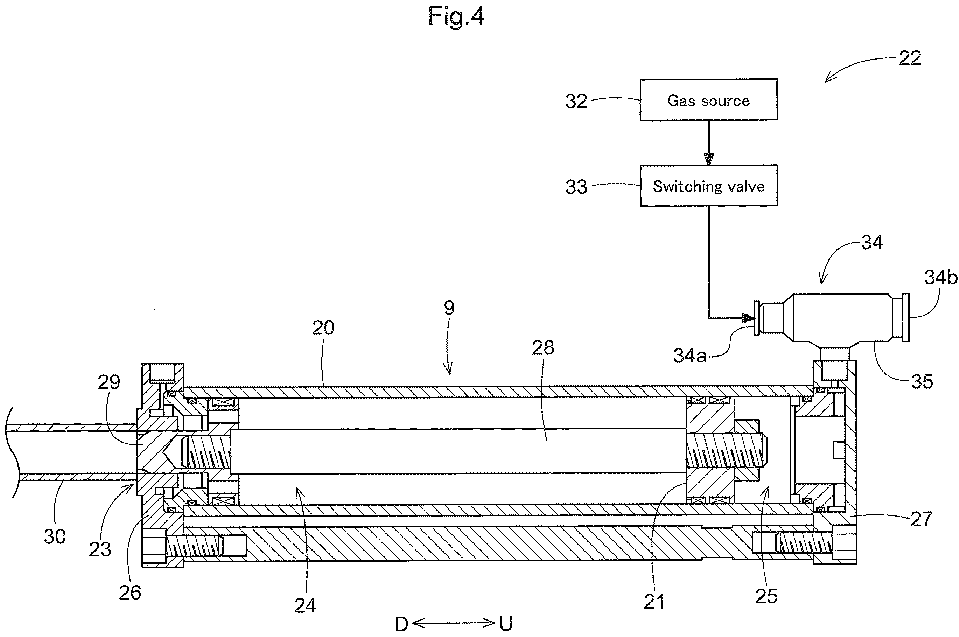

As illustrated in Fig. 4, the ejection mechanism 9 includes a cylinder tube 20, a piston 21 slidable in the cylinder tube 20, a gas supply and discharge section 22 (which is an example of the "gas supply and discharge means"), and an ejector 23.

The gas supply and discharge section 22 is switchable between a supply mode, in which the gas supply and discharge section 22 supplies gas (specifically, air as an example of the "gas") into the internal space of the cylinder tube 20, and an open mode, in which the gas supply and discharge section 22 exposes the internal space to the outside. The ejector 23 is configured to, in response to a movement of the piston 21, forcefully eject gas out of the cylinder tube 20 which gas has been supplied into the internal space and compressed.

The cylinder tube 20 contains as an internal space a first gas chamber 24 on a first side of the piston 21 in its slide direction and a second gas chamber 25 on a second side of the piston 21 in its slide direction. The second gas chamber 25 receives gas from the gas supply and discharge section 22. The first gas chamber 24 is provided with the ejector 23.

The ejection mechanism 9 includes a first sealing block 26 at an end of the cylinder tube 20 which end is on the first side in the slide direction. The first gas chamber 24 is between the first sealing block 26 and the piston 21. The ejection mechanism 9 includes a second sealing block 27 at an end of the cylinder tube 20 which end is on the second side in the slide direction. The second gas chamber 25 is between the second sealing block 27 and the piston 21.

The ejection mechanism 9 includes a rod 28 extending in the slide direction on the first side of the piston 21 in the slide direction. The ejector 23 is at the end of the cylinder tube 20 which end is on the first side in the slide direction. The ejector 23 has an opening extending through the first sealing block 26 in the slide direction. The rod 28 includes at an end on the first side in the slide direction a blocking portion 29 insertable in the opening of the ejector 23.

Inserting the blocking portion 29 into the opening of the ejector 23 blocks the ejector 23 as illustrated in Fig. 4. Sliding the rod 28 toward the second side in the slide direction removes the blocking portion 29 of the rod 28 from the opening to open the ejector 23. In other words, the rod 28 is switchable, in response to a movement of the piston 21, between a closed state, in which the rod 28 closes the ejector 23, and an open state, in which the rod 28 opens the ejector 23 to allow gas to be ejected.

The ejection mechanism 9 includes a discharge cylinder 30 disposed outward of the cylinder tube 20 on the first side in the slide direction and connected to the opening of the ejector 23. The ejector 23 ejects gas through the discharge cylinder 30 to discharge the gas downward. The gas supply and discharge section 22 is connected to a supply section of the second sealing block 27 on the cylinder tube 20.

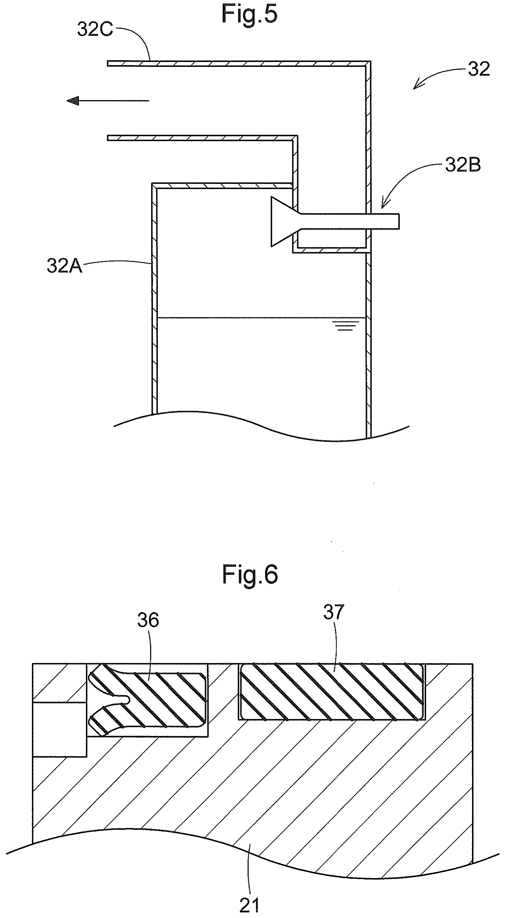

As illustrated in Fig. 4, the gas supply and discharge section 22 includes a gas source 32, a switching valve 33, and a rapid discharge valve 34. As illustrated in Fig. 5, the gas source 32 includes a tank 32A, an on-off valve 32B, and a discharge section 32C. The tank 32A is configured to store an easily vaporizable liquid in its internal space. The liquid vaporizes from the internal space through the on-off valve 32B. The discharge section 32C is configured to blow the forcefully expanding gas. The switching valve 33 is switchable between a supply state, in which the switching valve 33 lets out gas from the gas source 32, and a stop state, in which the switching valve 33 does not let out gas from the gas source 32.

The rapid discharge valve 34 is configured to, in response to the switching valve 33 being switched into the supply state, allow gas to be supplied into the internal space of the cylinder tube 20, and in response to the switching valve 33 being switched into the stop state, suddenly expose the internal space of the cylinder tube 20, specifically the second gas chamber 25, to the outside. The ejection mechanism 9 includes a control unit (not illustrated in the drawings) configured to control the respective operations of components such as the gas source 32 and the switching valve 33 on the basis of a predetermined process procedure (not illustrated in the drawings).

The rapid discharge valve 34 includes an inlet 34a configured to receive gas from the switching valve 33 and a discharge section 34b configured to discharge gas from inside the second gas chamber 25. The rapid discharge valve 34 is provided with a silencer 35 configured to reduce discharge noise during the discharge of gas from inside the second gas chamber 25.

The ejection mechanism 9 includes a backflow preventer disposed at a peripheral portion of the piston 21 and configured to allow gas having been supplied into the second gas chamber 25 to flow into the first gas chamber 24 and prevent gas having been supplied into the first gas chamber 24 from flowing into the second gas chamber 25. The backflow preventer is specifically a lip packing 36 as a unidirectional sealer.

The ejection mechanism 9 includes a dust seal 37 disposed at a portion surface of the piston 21 and configured to prevent entry of dust. As illustrated in Fig. 6, the lip packing 36 and the dust seal 37 are arranged in the slide direction. The lip packing 36 has a sealing function so directional as to allow gas to flow from the second gas chamber 25 into the first gas chamber 24 and prevent gas from flowing from the first gas chamber 24 into the second gas chamber 25.

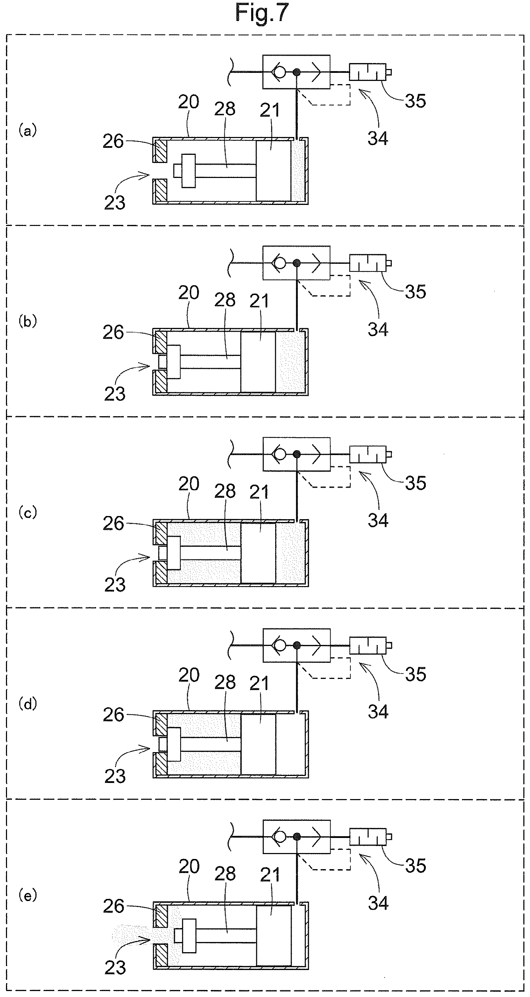

The description below deals with how the ejection mechanism 9 operates, with reference to Fig. 7.

As illustrated in (a) of Fig. 7, in response to the switching valve 33 being switched into the supply state, the ejection mechanism 9 supplies gas through the supply section into the second gas chamber 25 of the cylinder tube 20 in correspondence with the gas supply and discharge section 22 being switched into the supply mode. Next, as illustrated in (b) of Fig. 7, the gas supplied into the second gas chamber 25 slides the piston 21 toward the first side in the slide direction to switch the rod 28 into the closed state, in which the rod 28 closes the ejector 23.

As illustrated in (c) of Fig. 7, as the gas supply and discharge section 22 continues to supply gas, the gas flows from the second gas chamber 25 through the peripheral portion of the piston 21 into the first gas chamber 24. This compresses the gas in each of the second gas chamber 25 and the first gas chamber 24 and increases the internal pressure.

As illustrated in (d) of Fig. 7, in response to the switching valve 33 being switched into the stop state, the second gas chamber 25 discharges its compressed gas through the rapid discharge valve 34 in correspondence with the gas supply and discharge section 22 being switched into the open mode.

During the above operation, the lip packing 36 prevents gas from flowing from the first gas chamber 24 into the second gas chamber 25. Further, as illustrated in (e) of Fig. 7, the pressure difference between the first gas chamber 24 and the second gas chamber 25 moves the piston 21 toward the second side in the slide direction (that is, toward the right side in Fig. 7) to switch the rod 28 into the open state. This opens the ejector 23 and lets the compressed gas be forcefully ejected from the first gas chamber 24 through the ejector 23.

As illustrated in Fig. 3, the seeding devices H each include an agricultural material supply section 38 disposed at a portion of the ejector 23 from which portion the ejector 23 ejects gas and configured to supply seeds N from the discharger 8. The agricultural material supply section 38 is where the flow-down guide 17 communicates with the discharge cylinder 30, and is configured such that the ejector 23 forcefully ejects gas and that the gas causes a seed N from the discharger 8 to be ejected toward an agricultural field.

### [Second Embodiment]

The description below deals with a second embodiment.

The present embodiment is identical in configuration to the first embodiment except for how the ejection mechanism 9 is configured. The description below deals with how the present embodiment differs from the first embodiment, and omits to deal with the configuration shared by the present embodiment and the first embodiment.

The ejection mechanism 9 for the present embodiment includes a gas supply means 40 configured to supply gas into each of the first gas chamber 24 and the second gas chamber 25 of the cylinder tube 20. The gas supply means 40 includes a first supply section 41 configured to supply gas into the first gas chamber 24 and a second supply section 42 configured to supply gas into the second gas chamber 25. The gas supply and discharge means for the present embodiment is the second supply section 42.

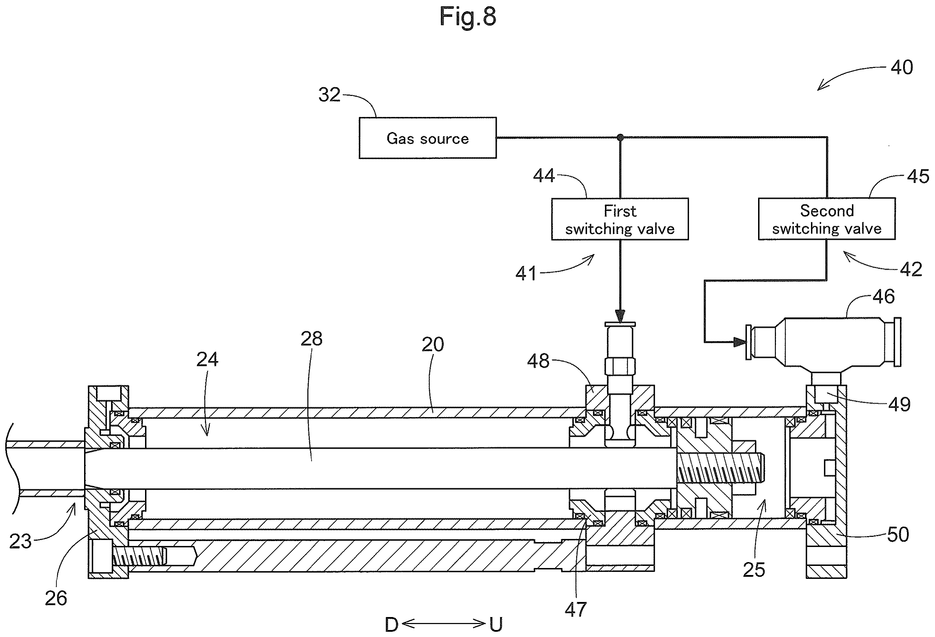

Specifically, as illustrated in Fig. 8, the gas supply means 40 includes a gas source 32, a first switching valve 44, a second switching valve 45, and a rapid discharge valve 46. The gas source 32 and the first switching valve 44 constitute the first supply section 41, whereas the gas source 32 and the second switching valve 45 constitute the second supply section 42.

The first switching valve 44 is switchable between a supply state, in which the first switching valve 44 lets gas from the gas source 32 into the second gas chamber 25, and a stop state, in which the first switching valve 44 does not let gas from the gas source 32 into the second gas chamber 25. The second switching valve 45 is switchable between a supply state, in which the second switching valve 45 lets gas from the gas source 32 into the first gas chamber 24, and a stop state, in which the second switching valve 45 does not let gas from the gas source 32 into the first gas chamber 24. The rapid discharge valve 46 is configured to, in response to the first switching valve 44 being switched into the supply state, allow gas to be supplied into the second gas chamber 25, and in response to the first switching valve 44 being switched into the stop state, suddenly expose the second gas chamber 25 to the outside.

The gas supply means 40 is configured to, with the rod 28 in the closed state, supply gas into each of the first gas chamber 24 and the second gas chamber 25. Switching the second supply section 42 from the supply mode into the open mode switches the rod 28 into the open state, causing the ejector 23 to eject compressed gas out of the cylinder tube 20.

The ejection mechanism 9 includes a central sealing block 47 at a portion of the cylinder tube 20 which portion is partway along the slide direction. The central sealing block 47 is so hollow as to allow the rod 28 to be inserted therethrough.

The ejection mechanism 9 includes on the cylinder tube 20 a first gas supply section 48 configured to receive gas from the first supply section 41 and a second gas supply section 49 configured to receive gas from the second supply section 42. The first gas supply section 48 is provided for a second sealing block 50, whereas the second gas supply section 49 is provided for the central sealing block 47.

The piston 21 is slidable between the central sealing block 47 and the second sealing block 50, that is, movable between the first gas supply section 48 and the second gas supply section 49.

The description below deals with how the ejection mechanism 9 operates.

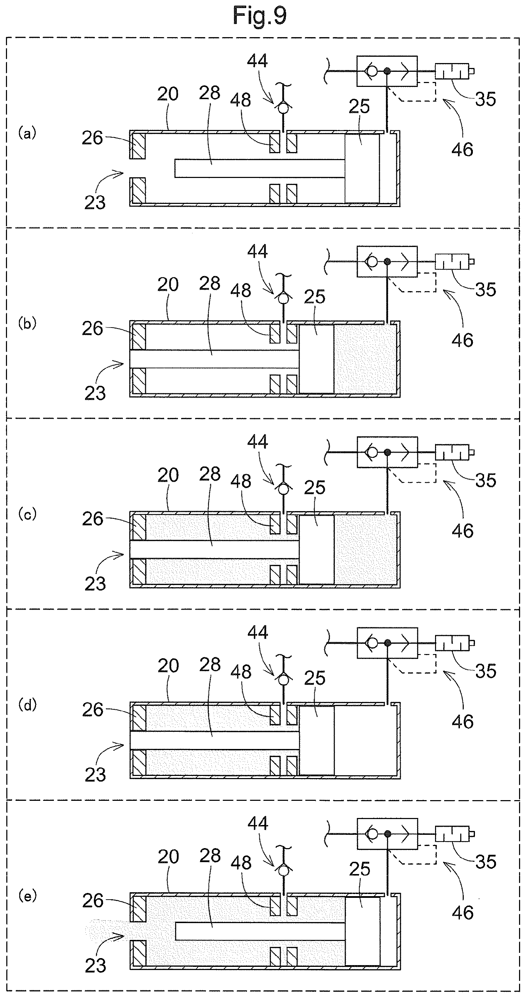

As illustrated in (a) of Fig. 9, in response to the first switching valve 44 being switched into the supply state, the ejection mechanism 9 supplies gas through the first gas supply section 48 into the second gas chamber 25 of the cylinder tube 20 in correspondence with the second supply section 42 being switched into the supply mode. As illustrated in (b) of Fig. 9, the gas supplied into the second gas chamber 25 slides the piston 21 toward the first side in the slide direction to switch the rod 28 into the closed state, in which the rod 28 closes the ejector 23.

As illustrated in (c) of Fig. 9, the second supply section 42 continues to supply gas, whereas the first supply section 41 starts to supply gas. This compresses the gas in each of the first gas chamber 24 and the second gas chamber 25 and increases the internal pressure.

As illustrated in (d) of Fig. 9, in response to the first switching valve 44 being switched into the stop state, the second gas chamber 25 discharges its compressed gas through the rapid discharge valve 46 in correspondence with the second supply section 42 being switched into the open mode.

As illustrated in (e) of Fig. 7, with a decrease in the internal pressure in the second gas chamber 25, the pressure difference between the first gas chamber 24 and the second gas chamber 25 moves the piston 21 toward the second side in the slide direction to switch the rod 28 into the open state. This opens the ejector 23 and lets the compressed gas be forcefully ejected from the first gas chamber 24 through the ejector 23. The ejector 23 forcefully ejects gas, which causes a seed N from the discharger 8 to be ejected toward an agricultural field.

### [Alternative Embodiments]

The description below deals with alternative embodiments.

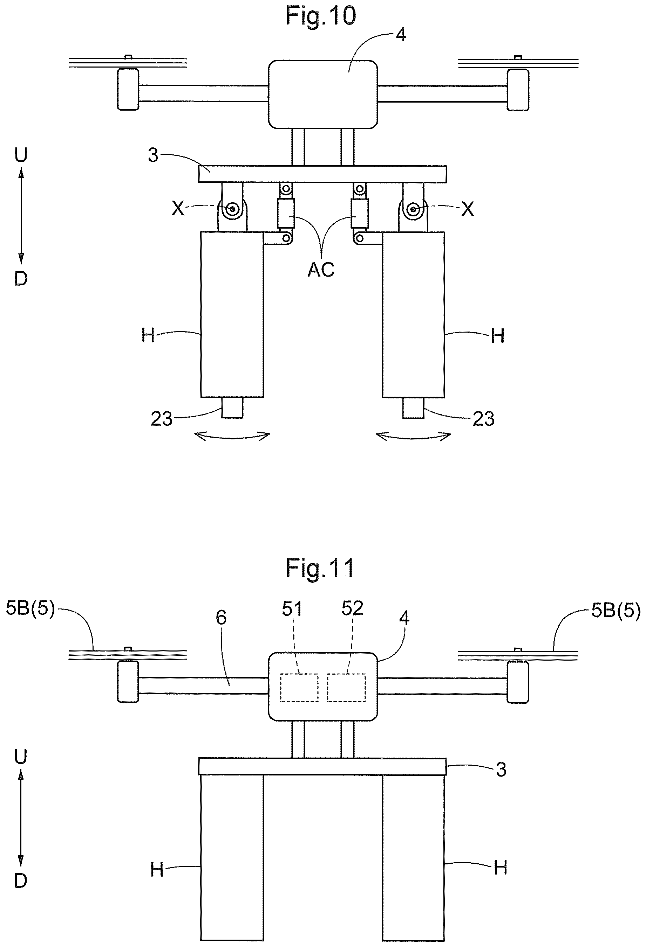

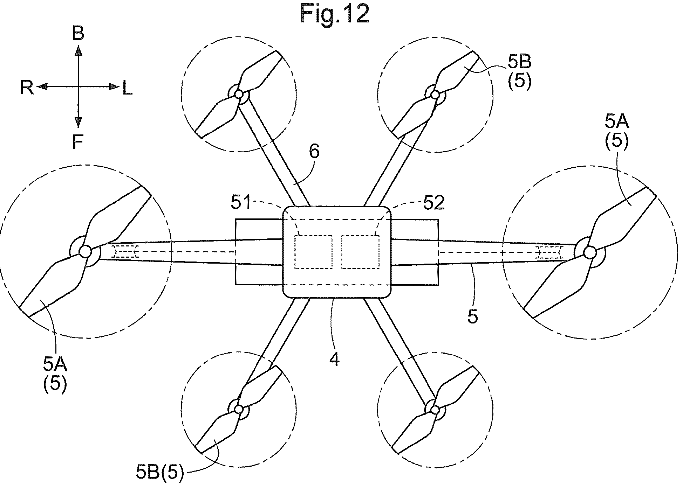

(1) The backflow preventer may be an O ring with a circular cross section. The piston 21 may, for instance, have a groove for containing an O ring which groove is so shaped as to exhibit a great sealing function for gas flowing toward the first side in the slide direction and form a gap for passage of gas flowing toward the second side in the slide direction for backflow prevention. The backflow preventer may alternatively be, for example, a backflow preventing valve at a separate passage extending from the first gas chamber 24 to the second gas chamber 25. The backflow preventer may be configured variously.
(2) The ejection mechanism 9 may include a simple element such as a lock pin as a holding mechanism and be configured to supply gas into the first gas chamber 24 to increase the pressure while holding the piston 21 at a position in the slide direction with use of the holding mechanism and then stop holding the piston 21 to blow gas.
(3) As illustrated in Fig. 10, the seeding devices H may each be suspended from the holding frame 3 in such a manner as to be swingable about an upper horizontal axis X to adjust the direction in which to eject an agricultural material. The work system may, in that case, include actuators AC such as electric cylinders each configured to adjust the direction in which the corresponding ejector 23 ejects an agricultural material. What is swingable is not necessarily each seeding device H in its entirety, but may be the ejection mechanism 9 (which includes an ejector 23) alone or even the ejector 23 alone.
(4) Instead of swinging each seeding device H in its entirety or a component such as the ejection mechanism 9 relative to the holding frame 3, the work system may cause the flying vehicle to change its orientation while flying to adjust the direction in which to eject an agricultural material. The work system causes the flying vehicle 2 to keep its orientation while hovering and change its orientation while flying forward simultaneously with the seeding operation by the seeding devices. This adjusts the direction in which to eject an agricultural material, so that the seeding devices each eject an agricultural material toward an intended position.
(5) The flying vehicle 2 may be configured as follows: As illustrated in Figs. 11 and 12, the flying vehicle 2 includes rotors 5 including main rotors 5A (main lift generators) and auxiliary rotors 5B (auxiliary lift generators). The main rotors 5A are configured to generate a lift for propelling (that is, lifting, raising, and lowering) the flying vehicle and flying the flying vehicle, whereas the auxiliary rotors 5B are configured to control the orientation of the flying vehicle 2. The flying vehicle 2 includes a body 4 including an engine 51, a power generator 52, and a battery 53. The power generator 52 is configured to generate electric power with use of motive power from the engine 51 and store the electric power in the battery 53. The rotors 5 are operable by motive power from the engine 51, electric power that the power generator 52 generates, or electric power stored in the battery 53. For instance, the main rotors 5A are operable by motive power from the engine 51, whereas the auxiliary rotors 5B are operable by electric power that the power generator 52 generates or electric power stored in the battery 53.
   The flying vehicle 2 configured as above may use a branch of a drive shaft for the engine or include an electric motor drivable by electric power from the power generator 52 to produce motive power as a driving force for the ejection mechanism 9 and for the discharger 8 to discharge seeds N from the storage (that is, the hopper 7).
(6) The gas source 32 may be configured variously, for instance, may include a compressor drivable by a driving source such as an electric motor or an engine to supply gas.
(7) The gas supply and discharge section 22 may include instead of the rapid discharge valve 34 an element such as a check valve based on pilot control pressure or an electromagnetic on-off valve.
(8) The ejection mechanism 9 is not necessarily configured to eject an agricultural material as the granule, but may be configured to eject another kind of granule.

### Industrial Applicability

The present invention is applicable to an ejecting device configured to eject a granule.

### Reference Signs List

- 20: Cylinder tube
- 21: Piston
- 22: Gas supply and discharge section (gas supply and discharge means)
- 23: Ejector
- 24: First gas chamber
- 25: Second gas chamber
- 28: Rod
- 36: Lip packing (backflow preventer)
- 38: Agricultural material supply section
- 42: Second supply section (gas supply and discharge means)

## Claims

1. An ejecting device, comprising:
a cylinder tube;
a piston slidable in the cylinder tube; and
a gas supply and discharge means switchable between a supply mode, in which the gas supply and discharge means supplies gas into an internal space of the cylinder tube, and an open mode, in which the gas supply and discharge means exposes the internal space to outside; and
an ejector configured to, in response to a movement of the piston, eject gas out of the cylinder tube which gas has been supplied into the internal space and compressed.

2. The ejecting device according to claim 1, wherein
the cylinder tube contains a first gas chamber on a first side of the piston in a slide direction and a second gas chamber on a second side of the piston in the slide direction,
the second gas chamber receives gas from the gas supply and discharge means, and
the first gas chamber is provided with the ejector.

3. The ejecting device according to claim 2, further comprising:
a rod extending in the slide direction on the first side of the piston in the slide direction,
wherein the ejector is at an end of the cylinder tube which end is on the first side in the slide direction,
the rod is switchable, in response to a movement of the piston, between a closed state, in which the rod closes the ejector, and an open state, in which the rod opens the ejector to allow gas to be ejected,
in response to the gas supply and discharge means being switched into the supply mode, the rod is switched into the closed state to allow gas to be supplied through the second gas chamber into the first gas chamber to be compressed, and
in response to the gas supply and discharge means being switched from the supply mode into the open mode, the rod is switched into the open state for the ejector to eject compressed gas out of the cylinder tube.

4. The ejecting device according to claim 3, further comprising:
a backflow preventer configured to allow gas having been supplied into the second gas chamber to flow into the first gas chamber and prevent gas having been supplied into the first gas chamber from flowing into the second gas chamber.

5. The ejecting device according to claim 4, wherein
the backflow preventer is in a form of a unidirectional sealer at a peripheral portion of the piston.

6. The ejecting device according to claim 3, wherein
the second gas chamber has a cross-sectional area larger than a cross-sectional area of the first gas chamber.

7. The ejecting device according to any one of claims 1 to 6, further comprising:
an agricultural material supply section disposed at a portion of the ejector from which portion the ejector ejects gas and configured to supply an agricultural material.
